# FASCICULE DE BREVET EUROPEEN

(11) **EP 1 518 746 B1**
(45) Date de publication et mention de la délivrance du brevet: **15.08.2007**
(21) Numéro de dépôt: 04292235.1
(22) Date de dépôt: 17.09.2004
(51) Int. Cl.: B60N 2/30

(54) **Véhicule automobile muni d'un siège arrière central escamotable et de sièges arrière latéraux coulissant en diagonale**
Kraftfahrzeug mit einem klappbaren zentralen Hintersitz und diagonal verschiebbaren seitlichen Hintersitzen
Automotive vehicle provided with a retractable central rear seat and diagonaly slidable lateral rear seats.

(30) Priorité: 26.09.2003 FR 0311309
(43) Date de publication de la demande: 30.03.2005
(73) Titulaire: Peugeot Citroën Automobiles S.A., 78140 Vélizy Villacoublay (FR)
(72) Inventeur: Devaux, Daniel, 77183 Croissy Beaubourg (FR); Proust, Patrick, 92160 Antony (FR)
(74) Mandataire: Thinat, Michel

(56) Documents cités:
- FR-A- 2 695 882
- US-A1- 2001 052 718
- US-A1- 2002 047 287
- US-A1- 2003 094 830

## Description

L'invention concerne en général les véhicules automobiles.

Plus précisément, l'invention concerne un véhicule automobile comprenant un siège arrière central disposé normalement dans une position d'utilisation, des sièges arrière latéraux occupant normalement des positions écartées de deux côtés latéraux opposés du siège central, et un espace de chargement situé derrière les sièges arrière délimité par un plancher.

Des véhicules de ce type sont connus de l'art antérieur. Par exemple, les véhicules connus sous le nom de « monospace » comprennent le plus souvent trois sièges arrière individualisés, par opposition à certaines berlines qui comprennent une banquette arrière et non des sièges individualisés.

Ces véhicules présentent le défaut que les trois sièges arrière sont larges, ce dont il résulte que les sièges latéraux sont collés aux portières, en particulier dans les petits monospaces.

D'autre part, le véhicule connu du document FR-A-2 695 882, FR 2 695 882 comprend trois sièges arrière définissant un siège central escamotable par coulissement sur le plancher du coffre du véhicule. Il en résulte une diminution significative du volume utile du coffre.

Dans ce contexte, la présente invention a pour but de pallier les défauts mentionnés ci-dessus.

A cette fin, le véhicule de l'invention, par ailleurs conforme à la définition générique qu'en donne le préambule ci-dessus, est essentiellement caractérisé en ce qu'il comprend un coffre ménagé dans le plancher, des moyens pour escamoter le siège arrière central de sa position d'utilisation à une position escamotée dans le coffre, et des moyens pour faire coulisser les sièges arrière latéraux l'un vers l'autre de leurs positions écartées à des positions rapprochées.

Dans un mode de réalisation possible de l'invention, le siège arrière central comprend un dossier

A cette fin, l'invention concerne un véhicule automobile comprenant un siège arrière central disposé normalement dans une position d'utilisation, des sièges arrière latéraux occupant normalement des positions écartées de deux côtés latéraux opposés du siège arrière central, le siège arrière central comprenant un dossier normalement en position dressée et une assise normalement en position horizontale ou proche de l'horizontale, un espace de chargement situé derrière les sièges arrière délimité par un plancher, des moyens pour escamoter le siège arrière central de sa position d'utilisation à une position escamotée, ces moyens comprenant des moyens d'articulation pour faire passer le dossier de sa position dressée à une position rabattue sur l'assise, le véhicule comprenant en outre des moyens pour faire coulisser les sièges arrière latéraux l'un vers l'autre de leurs positions écartées à des positions rapprochées (Véhcule automobile du type del que celui selon FR-A-2 695 882). Selon l'invention, ce véhicule comprend, ménagé dans le plancher du véhicule, un coffre dans lequel le siège arrière central est rangé dans sa position escamotée et des moyens de pivotement pour faire passer le dossier et l'assise respectivement de leurs positions rabattue et horizontale à des positions escamotées dans le coffre, ces moyens de pivotement comprenant un axe de pivotement transversal lié au plancher et disposé entre le siège arrière central en position d'utilisation et le coffre de façon à ne pas gêner le coulissement l'un vers l'autre de sièges arrière latéraux. des moyens de pivotement pour faire passer le dossier et l'assise respectivement de leurs positions rabattue et horizontale à des positions escamotées dans le coffre

Avantageusement, les moyens de pivotement comprennent un bras articulé autour de l'axe de pivotement et solidaire de l'assise.

De préférence, l'assise comprend une armature et une mousse fixée sur l'armature, le bras étant solidaire de l'armature.

Par exemple, les moyens de pivotement comprennent un organe moteur pour faire pivoter le bras autour de l'axe de pivotement.

Avantageusement, les moyens d'articulation comprennent un axe d'articulation transversal lié au bras, le dossier étant monté à rotation autour de cet axe par une partie inférieure.

De préférence, le bras repose sur le plancher par l'intermédiaire d'une butée en position horizontale de l'assise.

Par exemple, l'assise comprend des pieds escamotables par l'intermédiaire desquels elle repose sur le plancher en position horizontale.

Avantageusement, l'axe de pivotement est disposé dans un logement ménagé sous le plancher.

De préférence, les sièges arrière latéraux passent de leurs positions écartées à leurs positions rapprochées par coulissement oblique vers l'arrière et vers un plan vertical longitudinal médian du véhicule.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en coupe longitudinale d'un véhicule selon l'invention montrant le siège arrière central dans sa position d'utilisation,
- la figure 2 est une vue similaire à celle de la figure 1, le dossier du siège arrière central étant représenté en traits pleins en position rabattue,
- la figure 3 est une vue similaire à celle de la figure 1, le siège arrière central étant représenté en traits pleins en position escamotée,
- la figure 4 est une vue similaire à celle de la figure 1, le siège arrière central étant représenté en position escamotée et les sièges latéraux en positions écartées (traits pleins) et rapprochées (traits mixtes),
- la figure 5 est une vue de dessus partielle du véhicule de la figure 1, le siège arrière central étant représenté en position d'utilisation et les sièges latéraux en positions écartées,
- la figure 6 est une vue similaire à celle de la figure 5, le siège arrière central étant représenté en position escamotée et les sièges latéraux en positions écartées,
- la figure 7 est une vue similaire à celle de la figure 5, le siège arrière central étant représenté en position escamotée et les sièges latéraux en positions rapprochées,
- la figure 8 est une vue en coupe longitudinale d'un détail VIII de la figure 1,
- la figure 9 est une vue en coupe longitudinale d'un détail IX de la figure 3,
- la figure 10 est une vue en coupe transversale selon les flèches X de la figure 9,
- la figure 11 est une vue similaire à celle de la figure 10, les bras étant représentés engagés dans les fentes,
- la figure 12 est une vue en coupe transversale selon les flèches XII de la figure 8,
- la figure 13 est une vue en coupe transversale selon les flèches XIII de la figure 1, et
- la figure 14 est une vue similaire à la figure 13, le dossier du siège central étant représenté rabattu et les pieds de l'assise escamotés.

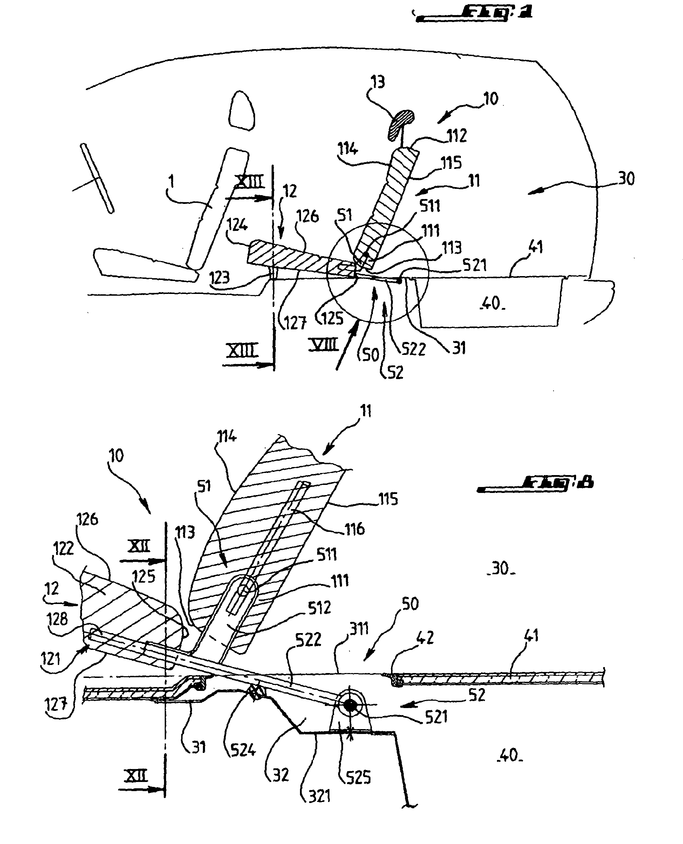

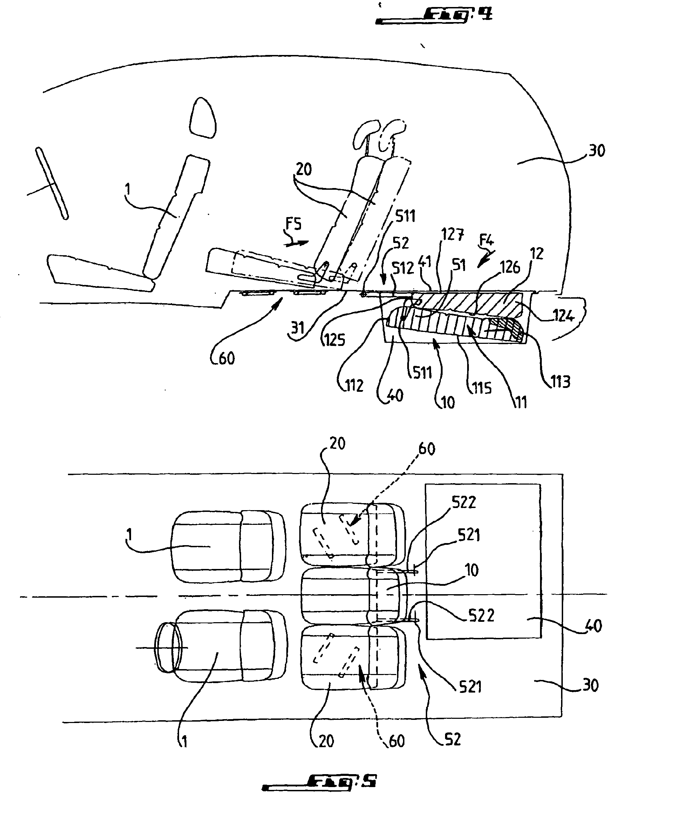

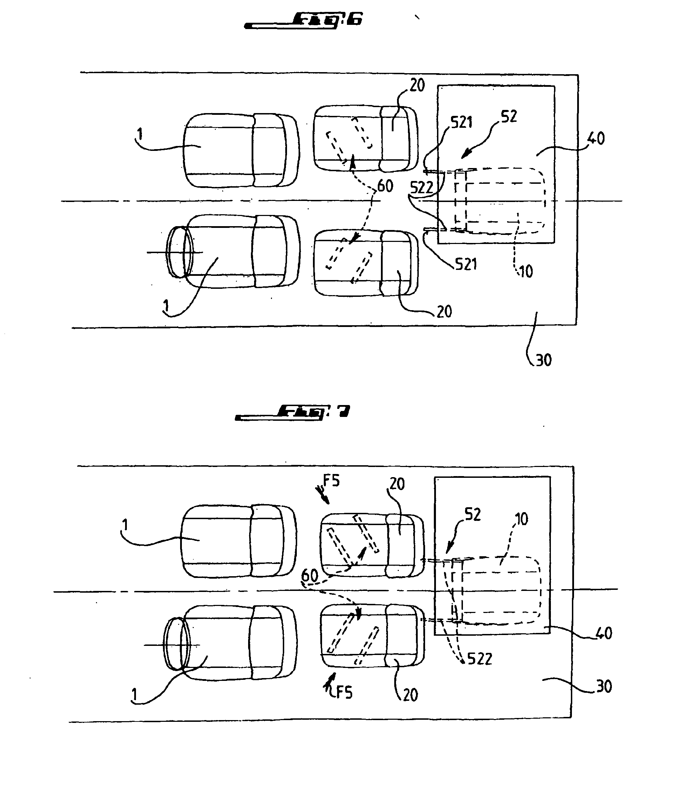

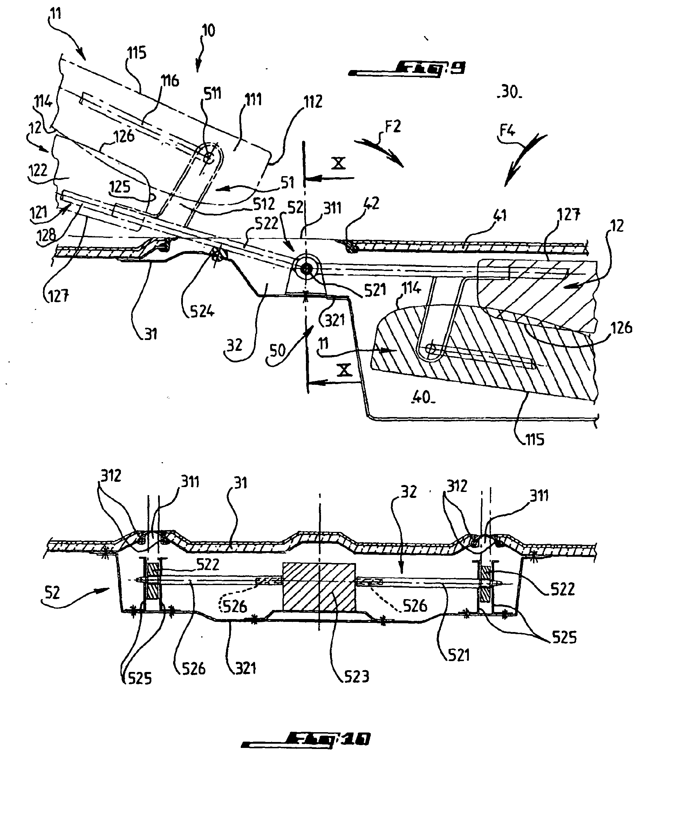

Le véhicule représenté sur les figures 1 et 5 comprend des sièges avant 1, un siège arrière central 10 disposé normalement dans une position d'utilisation, des sièges arrière latéraux 20 occupant normalement des positions écartées de deux côtés latéraux opposés du siège central 10, et un espace de chargement 30 situé derrière les sièges arrière 10 et 20 et délimité d'un côté inférieur par un plancher 31.

Les sièges arrière central et latéraux 10 et 20 sont alignés transversalement et disposés derrière les sièges avant 1.

Le siège arrière central 10 est, dans sa position d'utilisation, situé au centre du véhicule suivant la direction transversale, dans un plan vertical longitudinal médian du véhicule.

Selon l'invention, le véhicule comprend un coffre 40 ménagé dans le plancher 31, des moyens 50 pour escamoter le siège arrière central 10 de sa position d'utilisation à une position escamotée dans le coffre 40, et des moyens 60 pour faire coulisser les sièges arrière latéraux 20 l'un vers l'autre, de leurs positions écartées à des positions rapprochées.

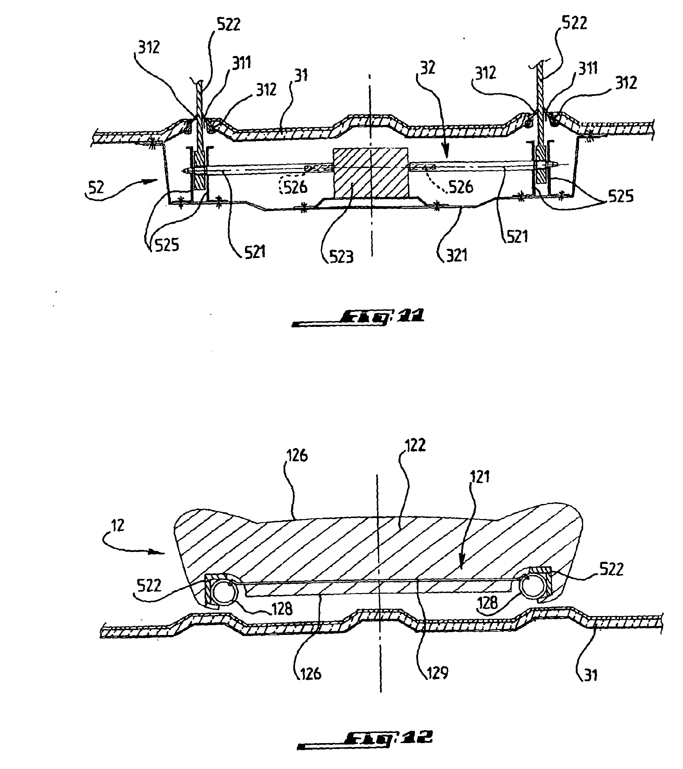

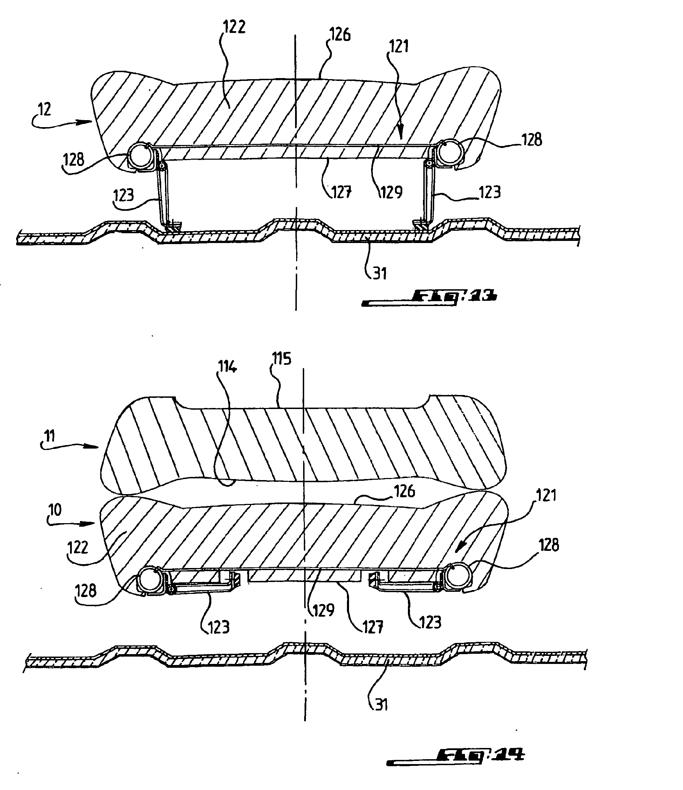

Les sièges arrière latéraux 20 passent de leurs positions écartées à leurs positions rapprochées par coulissement oblique vers l'arrière et vers le plan vertical longitudinal médian du véhicule, ce, mouvement étant représenté par la flèche F5 de la figure 7.

Les moyens 60 de coulissement des sièges arrière latéraux sont constitués de coulisses de type connu ménagées dans le plancher 31.

Le siège arrière central 10 comprend un dossier transversal 11 normalement en position dressée, une assise transversale 12 et un appui-tête 13 rétractable dans une partie supérieure du dossier 11.

L'assise 12 occupe normalement une position horizontale ou proche de l'horizontale, par exemple légèrement inclinée vers le bas à partir de l'avant, comme sur la figure 1. Cette position normale est appelée position horizontale dans la suite du texte.

L'assise 12 est de forme sensiblement parallélépipédique, et présente des bords avant et arrière 124 et 125 tournés vers l'avant et l'arrière du véhicule en position horizontale de l'assise, et des faces supérieure et inférieure 126 et 127 tournés respectivement vers le haut et vers le bas en position horizontale de l'assise 12.

Le dossier 11 en position dressée est vertical ou légèrement incliné vers l'arrière à partir du bas, comme sur la figure 1.

Le dossier 11 est de forme sensiblement parallélépipédique et présente des bords supérieur et inférieur 112 et 113 tournés respectivement vers le haut et vers le bas en position dressée du dossier, et des faces avant et arrière 114 et 115 tournées respectivement vers l'avant et vers l'arrière du véhicule en position dressée du dossier.

Le bord inférieur 113 du dossier 11 s'étend à proximité du bord arrière 125 de l'assise 12.

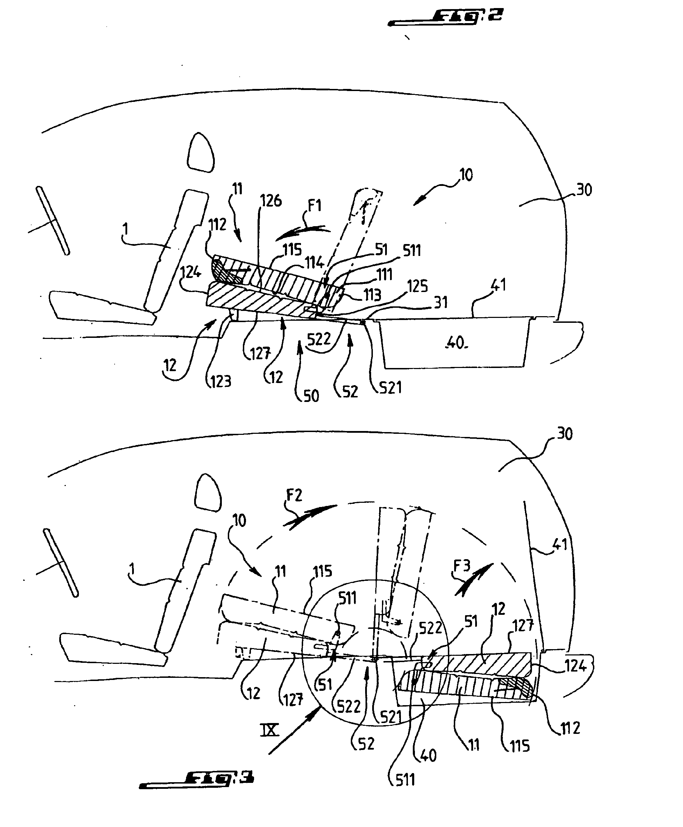

L'appui-tête 13 est normalement disposé au-dessus du bord supérieur 112 du dossier 11 et peut se rétracter complètement dans celui-ci, comme le montrent les figures 1 et 2.

Les moyens 50 pour escamoter le siège central 10 comprennent des moyens d'articulation 51 pour faire passer le dossier 11 de sa position dressée à une position rabattue sur l'assise 12, et des moyens de pivotement 52 pour faire passer le dossier 11 et l'assise 12 respectivement de leurs positions rabattue et horizontale à des positions escamotées dans le coffre 40.

Le mouvement du dossier 11 pour passer de sa position dressée à sa position rabattue est symbolisé par la flèche F1 de la figure 2, le pivotement du siège vers le coffre étant symbolisé par la flèche F2 de la figure 3.

Dans sa position rabattue, le dossier 11 est plaqué par sa face avant 114 sur la face supérieure 126 de l'assise, comme le montre la figure 2. La face arrière 115 du dossier 11 est alors tournée vers le haut.

Le coffre 40 est situé derrière le siège arrière central 11 en position d'utilisation et présente une face ouverte découpée dans le plancher 31. Un faux-plancher mobile 41 est normalement disposé sur cette face ouverte de façon à l'obturer.

Le coffre 40 présente une forme parallélépipédique, de taille suffisante pour recevoir l'assise 12 et le dossier 11 rabattu sur l'assise 12.

Comme le montre la figure 8, les moyens de pivotement 52 comprennent, des deux côtés latéraux opposés du siège central 10, un axe de pivotement 521 transversal lié au plancher 31 et disposé entre le siège central 10 en position d'utilisation et le coffre 40, et un bras 522 articulé autour de l'axe de pivotement 521 et solidaire de l'assise 12.

Les deux axes de pivotement 521 sont alignés, et les deux bras 522 sont parallèles et identiques.

Plus précisément, l'assise 12 comprend une armature 121 et une mousse 122 fixée sur l'armature 121, les bras 522 étant solidaire de l'armature 121.

L'armature 121 comprend au moins deux tubes parallèles 128 disposés des deux côtés latéraux opposés de l'assise 10, et s'étendant dans des évidements de la mousse 122, parallèlement à la face inférieure 127 de l'assise, le long de deux faces latérales opposées de cette assise 10. Des tiges transversales 129 maintiennent constant l'écartement des tubes 128.

Comme le montrent les figures 9 et 12, chaque bras 522 est aligné avec un des deux tubes 128 et comprend une extrémité libre présentant une section en L. On voit sur la figure 12 que le tube 128 vient se loger, sur une partie de sa longueur, dans l'angle du L, et est fixé, par exemple par soudage à cette partie libre en L.

On voit sur la figure 8 que les moyens d'articulation 51 du dossier comprennent, des deux côtés latéraux opposés du dossier 11, un axe d'articulation 511 transversal lié au bras 522, le dossier 11 étant monté à rotation autour de cet axe 511 par une partie inférieure 111.

Dans ce but, un support 512 est rigidement fixé sur chacun des bras 522. Ce support présente une forme allongée dans une direction longitudinale sensiblement perpendiculaire au bras 522 correspondant.

Le dossier 11 comprend une armature tubulaire 116 montée à rotation sur les supports 512 par les axes d'articulation 511.

Comme on le voit sur les figures 8 à 11, les bras 522 sont chacun articulés autour de l'axe de pivotement 521 correspondant entre des flasques 525 rigidement fixés dans un logement 32 ménagé sous le plancher 31, juste devant le coffre 40. Ce logement 32 communique par l'arrière avec le coffre 40. Les flasques 525 sont fixés sur un fond 321 de ce logement, situé à un niveau inférieur au niveau du plancher 31.

On voit sur les figures 8 et 9 que les bras 522, en position horizontale de l'assise, s'étendent vers l'avant à partir de l'axe de pivotement 521 et sont légèrement inclinés vers le haut. Ils reposent alors sur le plancher 31 par l'intermédiaire de butées 524.

Le siège arrière central 10 passe de sa position d'utilisation à sa position escamotée par pivotement de 180° environ autour de l'axe de pivotement 521, comme le montre la figure 9. Les bras 522 s'étendent, dans cette dernière position, vers l'arrière à partir de l'axe de pivotement 521 et sont pratiquement horizontaux.

Le dossier 11 en position escamotée dans le coffre 40 est disposé au fond du coffre 40, sous l'assise, sa face avant 114 tournée vers le haut.

L'assise 12 en position escamotée dans le coffre 40 est disposé au dessus du dossier 11, sa face inférieure 127 étant tournée vers le haut.

On notera que les moyens de pivotement 52 comprennent un organe moteur 523, par exemple un moteur électrique, disposé dans le logement 32, pour faire pivoter les deux bras 522 autour de leurs axes de pivotement 521 respectifs.

Plus précisément, comme le montre la figure 11, l'organe moteur 523 est disposé entre les deux paires de flasques 525, et présente un arbre d'entraînement 526 transversal, aligné avec les deux axes de pivotement 521, et faisant saillie des deux côtés de l'organe moteur 523. Les axes de pivotement 521 se prolongent d'un côté intérieur des bras 522 jusqu'à l'organe moteur 523 et sont liés en rotation à l'arbre d'entraînement 526.

Le plancher 31 recouvre le logement 32 et présente deux fentes longitudinales 311 dans lesquelles sont engagés les bras 522. Les bras 522 débattent d'un bout à l'autre de ces fentes quand le siège central arrière 10 passe de sa position d'utilisation à sa position escamotée. Ces fentes présentent, transversalement, une largeur légèrement supérieure à celle des bras 522.

Des joints à lèvres 312 sont fixés à deux bords longitudinaux opposés de chaque fente 311 et se recouvrent légèrement au centre de la fente 311. Ils assurent l'étanchéité et protègent l'axe de pivotement 521 et l'organe moteur 523 de la poussière.

Ces joints sont réalisés dans un matériau souple, comme du caoutchouc, qui leur permet de s'écarter au passage du bras 522.

Le faux-plancher 41 recouvre normalement le coffre 40. Avant de faire passer le siège central arrière 10 de sa position d'utilisation à sa position escamotée, il est donc nécessaire de soulever ce faux-plancher, par exemple en le faisant pivoter autour d'un bord transversal arrière, comme représenté par la flèche F3 de la figure 3. Le faux-plancher 41 est rabattu une fois le siège escamoté dans le coffre 40 et reprend sa place initiale, comme représenté par la flèche F4 de la figure 4.

Un joint d'étanchéité 42 est fixé à un bord transversal avant du faux plancher 41 et vient faire l'étanchéité entre le plancher 31 et le faux-plancher 41. Il est à noter, comme on le voit sur la figure 9, que les fentes 311 débouchent par des extrémités arrière ouvertes à l'interface entre le plancher 31 et le faux-plancher 41. Le joint d'étanchéité 42 vient alors fermer les fentes 311 par l'arrière.

L'assise 12 comprend encore, de deux côtés latéraux opposés, des pieds escamotables 123 par l'intermédiaire desquels elle repose sur le plancher 31 en position horizontale. Ces pieds sont disposés relativement plus proches du bord avant 124 que du bord arrière 125.

Comme le montrent les figures 13 et 14, les pieds 123 sont montés pivotant autour d'axes longitudinaux solidaires de l'armature 121 de l'assise, et sont mobiles entre une position de soutien de l'assise 10 dans laquelle ils s'étendent sensiblement perpendiculairement à la face inférieure 127, et une position de rangement dans laquelle ils sont plaqués contre cette face inférieure 127. Ils passent de l'une à l'autre par pivotement vers l'intérieur autour de leurs axes longitudinaux respectifs.

Ces pieds comprennent des butées en matière élastique, par lesquels ils reposent, en position de soutien, sur le plancher 31.

Dans une variante de réalisation, les moyens de pivotement 52 peuvent comprendre un axe de pivotement unique autour duquel les deux bras 522 sont articulés. De même, les moyens d'articulation 51 peuvent comprendre un axe d'articulation unique traversant transversalement le dossier, et lié à ses deux extrémités aux deux bras 522.

On comprend donc bien que le véhicule de l'invention est particulièrement commode, car les sièges arrière peuvent adopter deux configurations en fonction des besoins. Dans la configuration normale représentée sur la figure 5, le véhicule comprend trois sièges arrière utilisables.

Dans la configuration de la figure 7, le siège arrière central a été escamoté dans le coffre et les sièges latéraux ont été déplacés en oblique vers l'arrière et le centre. Les passagers assis sur ces sièges disposent alors d'un espace beaucoup plus grand devant et autour de leur siège. Leur confort en est grandement amélioré.

Dans une configuration intermédiaire, le siège central n'est pas escamoté dans le coffre mais son dossier est rabattu contre l'assise. Sa face arrière forme alors une tablette sur laquelle les passagers arrière peuvent poser des objets.

Par ailleurs, les moyens pour escamoter le siège arrière central sont simples, peu coûteux et de montage facile. Ils sont compacts et sont logés dans les mousses de l'assise et du dossier, sans gêner le confort des passagers. Ils n'augmentent pas l'encombrement transversal du siège.

## Revendications

1. Véhicule automobile comprenant un siège arrière central (10) disposé normalement dans une position d'utilisation, des sièges arrière latéraux (20) occupant normalement des positions écartées de deux côtés latéraux opposés du siège arrière central (10), le siège arrière central (10) comprenant un dossier (11) normalement en position dressée et une assise (12) normalement en position horizontale ou proche de l'horizontale, un espace de chargement (30) situé derrière les sièges arrière (10, 20) délimité par un plancher (31), des moyens (50) pour escamoter le siège arrière central (10) de sa position d'utilisation à une position escamotée, ces moyens (50) comprenant des moyens d'articulation (51) pour faire passer le dossier (11) de sa position dressée à une position rabattue sur l'assise (12), le véhicule comprenant en outre des moyens pour faire coulisser les sièges arrière latéraux (20) l'un vers l'autre de leurs positions écartées à des positions rapprochées, **caractérisé en ce qu'** il comprend, ménagé dans le plancher (31) du véhicule, un coffre (40) dans lequel le siège arrière central est rangé dans sa position escamotée et des moyens de pivotement (52) pour faire passer le dossier et l'assise (11, 12) respectivement de leurs positions rabattue et horizontale à des positions escamotées dans le coffre (40) ces moyens de pivotement (52) comprenant un axe de pivotement (521) transversal lié au plancher (31) et disposé entre le siège arrière central (10) en position d'utilisation et le coffre (40) de façon à ne pas gêner le coulissement l'un vers l'autre des sièges arrière latéraux (20).

2. Véhicule selon la revendication 1, **caractérisé en ce que** les moyens de pivotement (52) comprennent un bras (522) articulé autour de l'axe de pivotement (521) et solidaire de l'assise (12).

3. Véhicule selon la revendication 1, **caractérisé en ce que** l'assise (12) comprend une armature (121) et une mousse (122) fixée sur l'armature (121), le bras (522) étant solidaire de l'armature (121).

4. Véhicule selon la revendication 2 ou 3,
**caractérisé en ce que** les moyens de pivotement (52) comprennent un organe moteur (523) pour faire pivoter le bras (522) autour de l'axe de pivotement (521).

5. Véhicule selon l'une quelconque des revendications 2 à 4, **caractérisé en ce que** les moyens d'articulation (51) comprennent un axe d'articulation (511) transversal lié au bras (522), le dossier (11) étant monté à rotation autour de cet axe par une partie inférieure (111).

6. Véhicule selon l'une quelconque des revendications 2 à 5, **caractérisé en ce que** le bras (522) repose sur le plancher (31) par l'intermédiaire d'une butée (524) en position horizontale de l'assise (12).

7. Véhicule selon l'une quelconque des revendications 2 à 6, **caractérisé en ce que** l'axe de pivotement (521) est disposé dans un logement (32) ménagé sous le plancher (31).

8. Véhicule selon l'une quelconque des revendications 1 à 7, **caractérisé en ce que** l'assise (12) comprend des pieds (123) escamotables par l'intermédiaire desquels elle repose sur le plancher (31) en position horizontale.

9. Véhicule selon l'une quelconque des revendications précédentes, **caractérisé en ce que** les sièges arrière latéraux (20) passent de leurs positions écartées à leurs positions rapprochées par coulissement oblique vers l'arrière et vers un plan vertical longitudinal médian du véhicule.

## Claims

1. A motor vehicle comprising a central rear seat (10) normally positioned in a position of use, side rear seats (20) normally occupying spaced-out positions on both opposite sides of the central rear seat (10), the central rear seat (10) comprising a back (11) normally in the raised position and a seat bottom (12) normally in a horizontal position or close to the horizontal, a loading space (30) located behind the rear seats (10, 20) delimited by a floor (31), means (50) for retracting the central rear seat (10) from its position of use to a retracted position, these means (50) comprising jointing means (51) so as to have the back (11) move from its raised position to a lowered position on the seat bottom (12), the vehicle further comprising means for sliding the side rear seats (20) towards each other from their spaced-out positions to closer positions, **characterized in that** it comprises, provided in the floor (31) of the vehicle, a boot (40) into which the central rear seat is stored away in its retracted position and pivot means (52) to have the back and the seat bottom (11, 12) respectively move from their horizontal lowered positions to retracted positions in the boot (40), these pivot means (52) comprising a transverse pivot axis (521) bound to the floor (31) and positioned between the central rear seat (10) in the position of use and the boot (40) so as not to interfere with the sliding of the side rear seats (20) towards each other.

2. The vehicle according to claim 1, **characterized in that** the pivot means (52) comprise an arm (522) jointed around the pivot axis (521) and integral with the seat bottom (12).

3. The vehicle according to claim 1, **characterized in that** the seat bottom (12) comprises a frame (121) and a foam (122) attached on the frame (121), the arm (522) being integral with the frame (121).

4. The vehicle according to claim 2 or 3, **characterized in that** the pivot means (52) comprise a drive member (523) in order to pivot the arm (522) around the pivot axis (251).

5. The vehicle according to any of claims 2 to 4, **characterized in that** the jointing means (51) comprise a transverse joint axis (511) bound to the arm (522), the back (11) being rotatably mounted around this axis by a lower portion (111).

6. The vehicle according to any of claims 2 to 5, **characterized in that** the arm (522) rests on the floor (31) through a stop (524) in the horizontal position of the seat bottom (12).

7. The vehicle according to any of claims 2 to 6, **characterized in that** the pivot axis (521) is positioned in a housing (32) provided under the floor (31).

8. The vehicle according to any of claims 1 to 7, **characterized in that** the seat bottom (12) comprises retractable legs (123) through which it rests on the floor (31) in the horizontal position.

9. The vehicle according to any of the preceding claims, **characterized in that** the side rear seats (20) move from their spaced-out positions to their closer positions by obliquely sliding rearwards and towards a medium longitudinal vertical plane of the vehicle.

## Patentansprüche

1. Kraftfahrzeug mit einem zentralen Hintersitz (10), der normal in einer Benutzerstellung angeordnet ist, seitlichen Hintersitzen (20), die normalerweise entlegene Stellungen an zwei gegenüberliegenden seitlichen Seiten des zentralen Hintersitzes (10) einnehmen, wobei der zentrale Hintersitz (10) eine Rückenlehne (11) umfasst, die normalerweise in aufgerichteter Stellung ist, und eine Sitzfläche (12), die normalerweise in horizontaler Stellung oder nahe der Horizontalen ist, einer Ladefläche (30), die sich hinter den Hintersitzen (10, 20) befindet und von einem Boden (31) begrenzt ist, Mitteln (50), um den zentralen Hintersitz (10) aus seiner Benutzerstellung in eine geklappte Stellung zu klappen, wobei diese Mittel (50) Gelenkmittel (51) umfassen, um die Rückenlehne (11) aus ihrer aufgerichteten Stellung in eine auf die Sitzfläche (12) heruntergeklappte Stellung zu befördern, wobei das Fahrzeug weiterhin Mittel umfasst, um die seitlichen Hintersitze (20) zueinander aus ihren entlegenen Stellungen in angenäherte Stellungen zu verschieben, **dadurch gekennzeichnet, dass** es einen in den Boden (31) des Fahrzeugs eingearbeiteten Stauraum (40) umfasst, in den der zentrale Hintersitz in seiner geklappten Stellung verstaut wird, und Schwenkmittel (52), um die Rückenlehne und die Sitzfläche (11, 12) jeweils aus ihren heruntergeklappten und horizontalen Stellungen in in den Stauraum (40) geklappte Stellungen zu befördern, wobei diese Schwenkmittel (52) eine transversale Schwenkachse (521) umfasst, die mit dem Boden (31) verbunden ist und zwischen dem zentralen Hintersitz (10) in Benutzerstellung und dem Stauraum (40) angeordnet ist, so dass das Verschieben der seitlichen Hintersitze (20) zueinander nicht behindert wird.

2. Fahrzeug nach Anspruch 1, **dadurch gekennzeichnet, dass** die Schwenkmittel (52) einen Arm (522) umfassen, der um die Schwenkachse (521) angelenkt und mit der Sitzfläche (12) verbunden ist.

3. Fahrzeug nach Anspruch 1, **dadurch gekennzeichnet, dass** die Sitzfläche (12) eine Armierung (121) und einen auf der Armierung (121) befestigten Schaumstoff (122) umfasst, wobei der Arm (522) mit der Armierung (121) verbunden ist.

4. Fahrzeug nach Anspruch 2 oder 3, **dadurch gekennzeichnet, dass** die Schwenkmittel (52) ein Antriebselement (523) umfassen, um den Arm (522) um die Schwenkachse (521) zu schwenken.

5. Fahrzeug nach einem der Ansprüche 2 bis 4, **dadurch gekennzeichnet, dass** die Gelenkmittel (51) eine transversale, mit dem Arm (522) verbundene Gelenkachse (511) umfassen, wobei die Rückenlehne (11) durch einen unteren Teil (111) in Rotation um diese Achse montiert ist.

6. Fahrzeug nach einem der Ansprüche 2 bis 5, **dadurch gekennzeichnet, dass** der Arm (522) in horizontaler Stellung der Sitzfläche (12) über einen Anschlag (524) auf dem Boden (31) aufliegt.

7. Fahrzeug nach einem der Ansprüche 2 bis 6, **dadurch gekennzeichnet**, das die Schwenkachse (521) in einer Aufnahme (32) angeordnet ist, die unter dem Boden (31) vorgesehen ist.

8. Fahrzeug nach einem der Ansprüche 1 bis 7, **dadurch gekennzeichnet, dass** die Sitzfläche (12) klappbare Füße (123) umfasst, anhand derer sie in horizontaler Stellung auf dem Boden ruht (31).

9. Fahrzeug nach einem der vorangehenden Ansprüche, **dadurch gekennzeichnet, dass** die seitlichen Hintersitze (20) aus ihren entlegenen Stellungen durch schräge Verschiebung nach hinten und in Richtung einer vertikalen mittleren Längsebene des Fahrzeugs in ihre angenäherte Stellungen übergehen.
